# EUROPEAN PATENT SPECIFICATION

(11) **EP 0 550 919 B1**
(45) Date of publication and mention of the grant of the patent: **05.02.1997**
(21) Application number: 92202910.3
(22) Date of filing: 22.09.1992
(51) Int. Cl.: B65G 65/00

(54) **Apparatus for loading containers with stacks of egg-filled trays and unloading same**
Einrichtung zum Beladen von Behältern mit Stapeln von Eierplatten und zum Entladen derselben
Dispositif pour le chargement de conteneurs avec des piles de plateaux à oeufs et pour le déchargement de ceux-ci

(30) Priority: 07.01.1992 NL 9200016
(43) Date of publication of application: 14.07.1993
(73) Proprietor: FPS Food Processing Systems B.V., NL-3771 VE Barneveld (NL)
(72) Inventor: van der Schoot, Jelle, NL-7121 AL Aalten (NL)
(74) Representative: Smulders, Theodorus A.H.J., Ir.

(56) References cited:
- EP-A- 0 534 558
- DE-A- 2 428 238
- DE-U- 9 103 197
- FR-A- 2 584 964
- FR-A- 2 602 119
- GB-A- 2 106 070
- US-A- 3 820 667
- US-A- 4 247 241
- US-A- 4 787 799
- US-A- 5 007 785

## Description

The invention relates to an apparatus for loading containers with stacks of egg-filled trays, said containers being equipped with a series of loading boards onto which said stacks can be arranged side by side, and for unloading such containers, said apparatus comprising:
- a lifting table for supplying said stacks to a loading board of the container to be loaded, said lifting table having a flat bearing surface
- pushing means movable relative to said lifting table in the direction of said container for placing the egg tray stacks on the loading board to be loaded.

Such apparatus is described in EP-A-0 534 558 which is a prior art reference in the sense of Art. 54(3)EPC.

In many cases, the loading of containers with stacks of egg-filled trays and the unloading thereof are still done by hand. As far as the loading of the containers is concerned, this is quite understandable, for the simple reason that eggs on a chicken farm are laid and gathered in places of wide geographical distribution. The loaded containers are then supplied to one or more apparatuses in which the eggs undergo a number of further operations, such as a check for damage, candling, grading by weight etc. Heretofore, therefore, automation of egg processing has mainly been focused on installations for unloading containers loaded with egg-filled trays. Such an unloading apparatus is for instance known from U.S.-A-5,007,785. This unloading apparatus comprises a fork controllable in three mutually perpendicular directions, which can be positioned under a stack of egg-filled trays present in a container so as to remove the stack from the container and subsequently place it on a discharge conveyor arranged in the vicinity thereof. Although, in principle, loading a container requires the same movements to be made as unloading does, albeit in reverse order, this known unloading apparatus is less suitable for loading a container because in that case a stack of egg trays must be placed on the fork of the apparatus in an exactly defined position.

GB-A-2,106,070 describes a container unloading apparatus of a different type, in which, by means of a pusher plate, the stacks of egg-filled trays are pushed from the container and shifted onto a conveyor arranged at a fixed height on the side of the container remote from the pusher plate. In this known unloading apparatus, the container can be moved in a vertical direction so as to bring the loading board to be unloaded to the appropriate height of the conveyor. This unloading apparatus can only be used for containers which are completely open both at the front and at the back.

In above mentioned EP-A-0 534 558 an apparatus for loading and unloading containers is described comprising a gantry, in which the lifting table and the pushing means are mounted, which gantry is to be positioned in front of a stationary located container to be loaded or unloaded. On the opposite side of the container another gantry is located, comprising spreading elements for moving stacks of egg trays sideways within the container. Said container must therefore be open on both sides during the loading operation.

For unloading said container the gantry comprising the spreading elements has to be removed and replaced by another gantry, comprising a number of pushing elements capable of pushing the stacks of egg trays onto the lifting table, located at the opposite side of the container to be unloaded. Further pushing elements are present to move the stacks, positioned near the short sides of the container towards the central part of a container load board. For unloading the container should also be open on both oppositely located short sides of the container.

The object of the invention is to provide an apparatus of the above described type, which is suitable for loading and unloading containers which are open only at the front side thereof.

To that end, the apparatus according to a first embodiment of the invention is characterized by the features of claim 1.

With such apparatus the stacks of egg trays to be placed in the container can be shifted from a feed conveyor sideways onto the lifting table and subsequently be placed in the container using the pushing means. These shifting operations can be carried out faster compared to the exact positioning of the stacks of egg trays on a fork-shaped carrier member as used in the unloading apparatus according to US-A-5,007,785 discussed hereinabove.

During a loading operation the prongs of the fork function as guiding means, the shift of the stack of egg trays being principally effected by means of the pusher plate. When unloading a container the prongs of the fork function as carrier means.

To enable egg tray stacks to be arranged side by side on a loading board of a container which is completely open at the front, the lifting table and the container should be capable of being moved back and forth laterally with respect to each other, i.e. by placing the container on a support table which is movable in the lateral direction relative to the lifting table. A great number of containers, now in use, do not have a completely open front, the entrance space above a load board being limited by angle iron-shaped supporting columns at the corners of the container and a depending edge provided on the load boards for retaining and protecting the egg tray stacks, placed in the container.

In order to enable the space between two loading boards located above each other in such containers to be completely filled the apparatus according to the invention is further characterized in that the lifting table is mounted for lateral movement in a lifting frame, movable in vertical direction, said lifting frame being provided with a lifting mechanism comprising an axially extending movable pin for lifting the depending edge of the container loading board, located above the container loading board to be loaded or unloaded.

In a second embodiment which is characterised by the features of claim 5, the fork connected to the pusher plate is replaced by a flat carrier plate, whose top surface is in alignment with the bearing surface of the lifting table and which is movably mounted therein by means of a pneumatic cylinder, the movement of said carrier plate being independent of the movement of the pusher member of the pushing means.

Further constructional embodiments of the apparatus according to the invention are defined in the sub-claims.

The invention will now be described with reference to the drawings in which:
Fig. 1 is a perspective view of a container suitable for loading and unloading from the open front;
Fig. 2 is a schematic top plan view of a container loading and unloading apparatus according to the invention;
Fig. 3 is an elevation similar to Fig. 2, of a slightly modified embodiment;
Fig. 4 is an enlarged detail of the apparatus according to Fig. 3 taken on the line IV-IV in Fig. 6;
Fig. 5 is a section taken on the line V-V in Fig. 4;
Fig. 6 is a side elevation of the apparatus according to Fig. 3;
Fig. 7 is a side elevation similar to Fig. 6, with the lifting table shown in a different position;
Fig. 8 is a top plan view similar to Fig. 2, showing a second embodiment with a laterally movable container;
Fig. 9 is a side elevation of the apparatus according to Fig. 8;
Fig. 10 is an elevation of a detail of the apparatus taken on the line X-X of Fig. 9;
Fig. 11 is an elevation according to Fig. 9 during retraction of the carrier plate;
Fig. 12 is an elevation similar to Fig. 8, with a modified lifting table suitable for unloading the container;
Fig. 13 is a top plan view similar to Fig. 8, with a modified lifting table provided with orienting means and gripping elements;

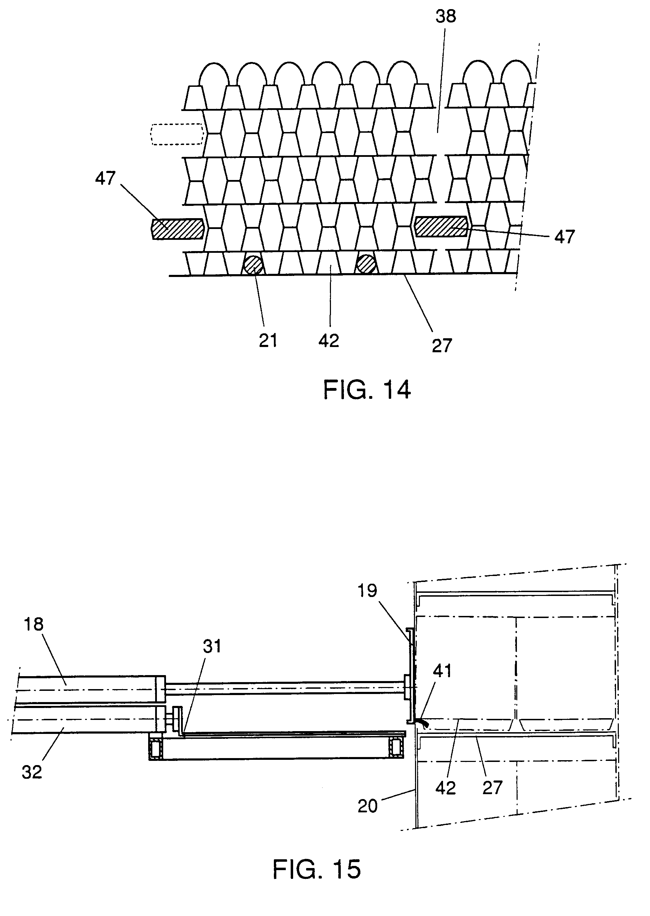

Fig. 14 shows a stack of egg-filled trays having carrying prongs and orienting means inserted therein; and
Fig. 15 is an elevation similar to Fig. 11.

The supply of egg-filled tray stacks 2 to the loading and unloading apparatus takes place by means of a feed conveyor 1 at the end of which a stop 3 is present. Arranged on the side of the end of the feed conveyor 1 is a pusher cylinder 4 with plate 5, capable of pushing one or both stacks 2 onto a lifting table 6 arranged on the opposite side of the feed conveyor 1. This lifting table 6 is mounted for lateral movement in a lifting frame 7 which can be moved vertically along the guides 10 of the columns 8 by means of driving chains 9. Mounted on the corner sections 12 of the frame 7 are guiding rollers 11 which run in guides 10.

The lifting table 6 is provided with a schematically shown driving means 13 capable of driving a pinion 14 mounted on a shaft 15, this pinion 14 being in engagement with a toothed rack 16 mounted in the frame 7.

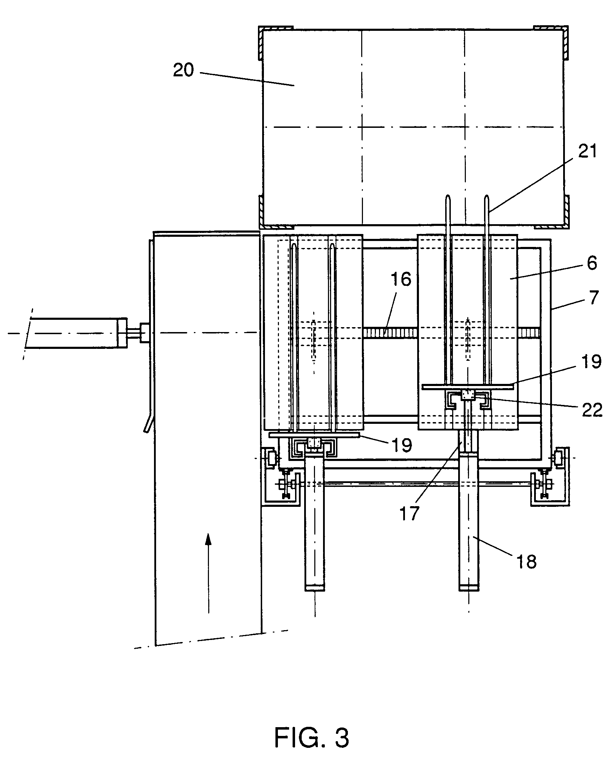

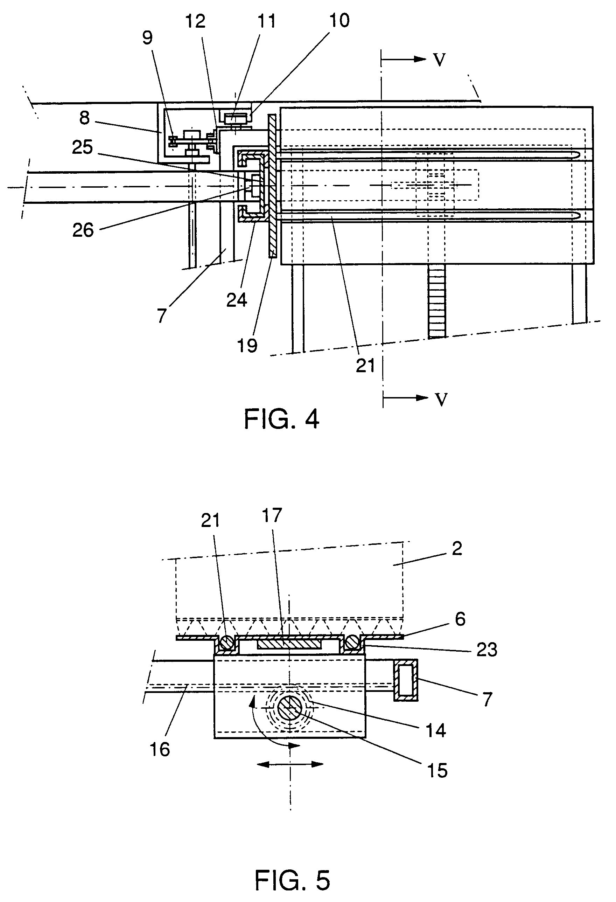

The lifting table is provided with a support 17 (see Figs 3, 6 and 7) on which is mounted a driving cylinder 18 with a pusher plate 19. After the lifting table 6 has been moved to the desired level at the height of a loading board 27 of a container 20, the stacks 2 are pushed into the container 20 by means of the pusher plate 19. In order to enable the egg-filled tray stacks 2 to be lifted relative to the lifting table 6 and moved laterally within the container 20, the pusher plate 19 is provided with gripping means in the form of fork elements 21 vertically movable by means of a lifting cylinder 22. While the stacks 2 are being pushed from the feed conveyor 1 onto the lifting table 6, the fork elements 21 are accommodated in tunnel-shaped recesses 23 (see Fig. 5) provided in the lifting table 6. For guiding the pusher plate 19 as it moves in upward direction, the pusher plate 19 is provided with guiding sections 24 accommodating a supporting section 25 which is mounted by the lower end thereof on the end of the piston rod 26 of the driving cylinder 18.

To increase the processing capacity, the lifting frame 7 can be provided with more than one lifting table 6, these lifting tables being capable of placing a series of egg tray stacks 2 onto the same loading board level simultaneously and independently of each other (see Fig. 3).

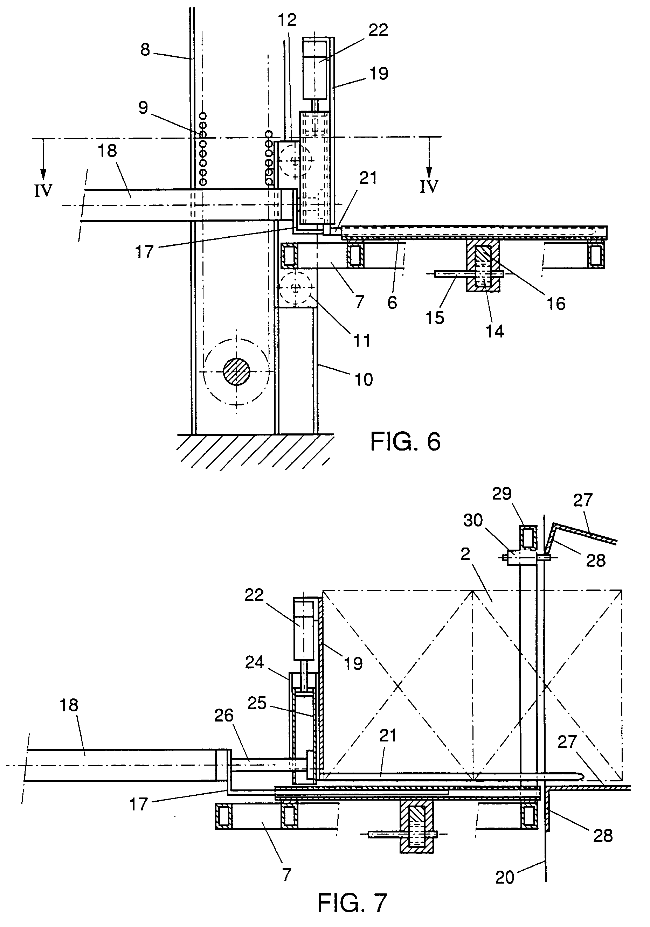

If the loading boards 27 are tiltably mounted in the container 20, as shown in Fig. 7, and provided with a depending edge 28 for retaining and protecting the egg tray stacks 2 placed in the container 20, the frame 7 is fitted with an element 29, projecting above the lifting table, on which is mounted a movable pin 30 capable of extending under the edge 28 during the upward movement of the frame 7 and lifting this edge to enable an egg tray stack 2 to be pushed in.

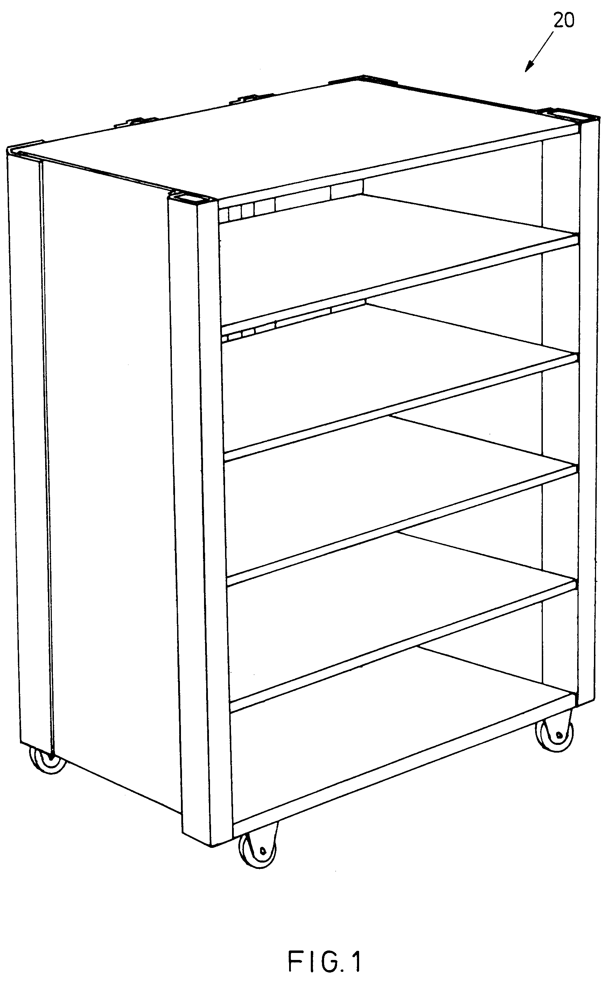

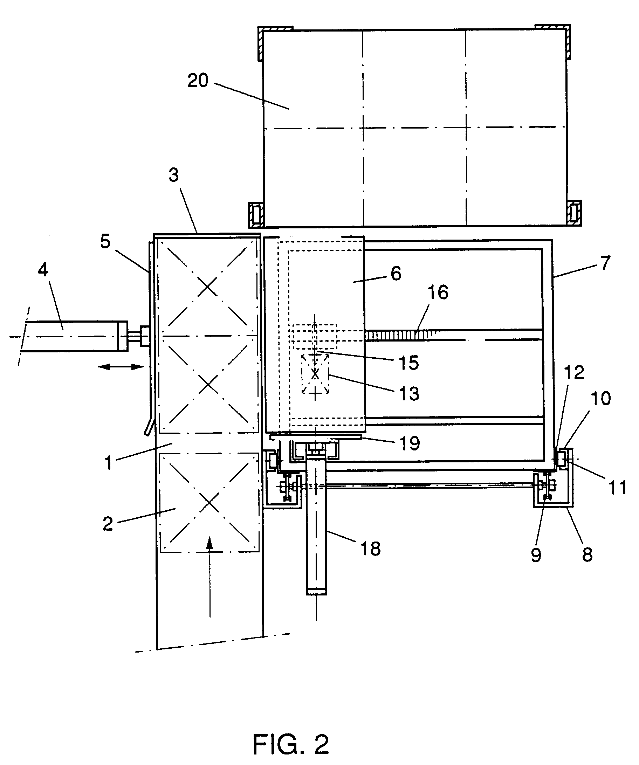

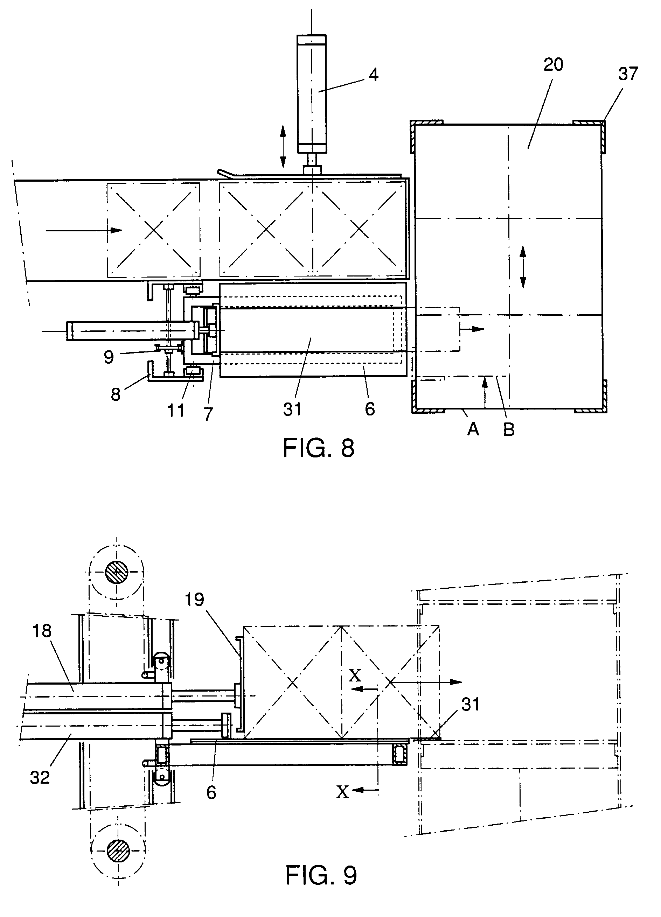

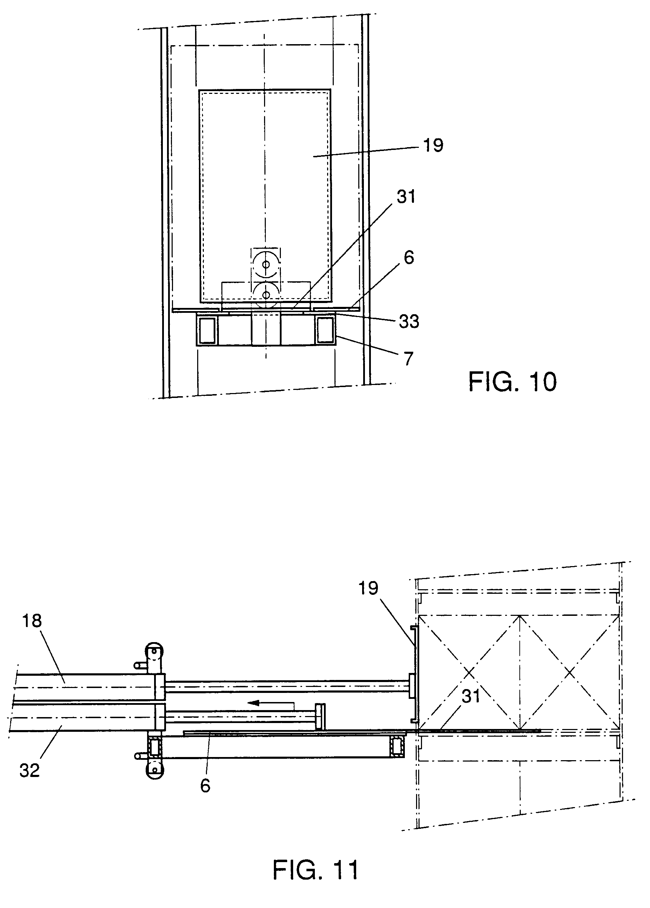

Figs 8-11 show a variant of the apparatus according to the invention, in which corresponding parts are indicated by identical reference numerals. Unlike the embodiment according to Figs 2-7, the lifting table 6 in this variant is only movable in vertical direction by means of the lifting frame 7. The lifting table 6 is provided with a flat carrier plate 31, replacing the prongs 21 according to the embodiment described earlier. The carrier plate 31 is connected with a separate pneumatic cylinder 32, enabling the carrier plate 31 to be driven in forward and backward direction independently of the pusher plate 19, so that the carrier plate 31 can be retracted while the pusher plate 19 is stationary (see Fig. 11). As the lifting table is only movable in vertical direction, the container 20 must be movable in lateral direction relative to the lifting table to enable egg tray stacks 2 to be arranged side by side on a loading board. This lateral movement is further necessary to enable the egg tray stacks 2 arranged on the side to be placed behind the angle iron-shaped supporting columns 37 of the container 20 which is different from the container shown in Fig. 1 which is completely open at the front. The carrier plate 31 rests on strips 33 arranged below the bearing surface of the lifting table 6, all this in such a manner that the top surface of the carrier plate 31 aligns with and is located in the same plane as the bearing surface of the lifting table 6.

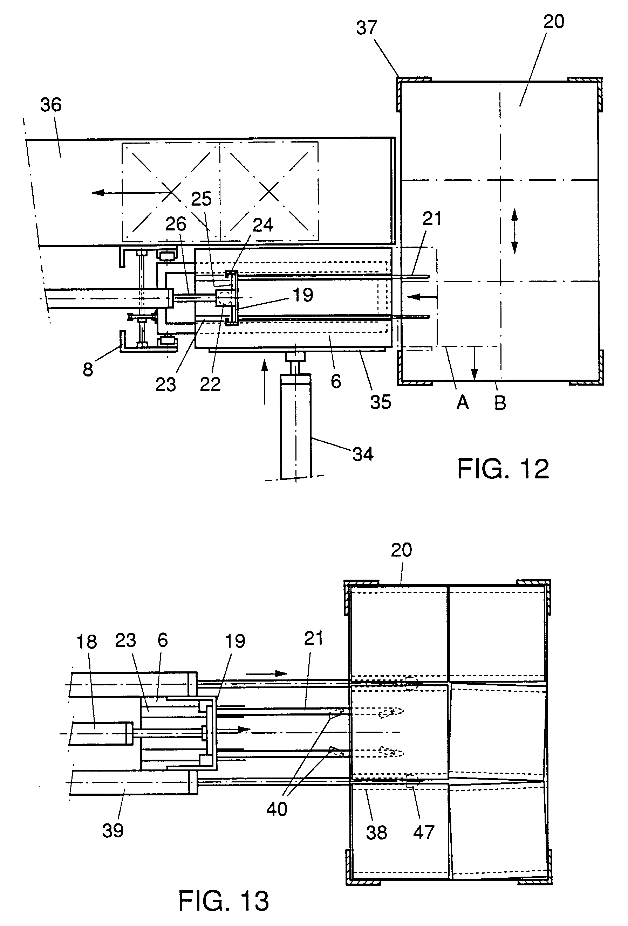

In Fig. 12, which corresponds with Fig. 8, the apparatus according to the invention is shown in the unloading version. Unlike Fig. 8, Fig. 12 shows the lifting table provided with prong-shaped carrier elements 21 as shown in Figs 2-7. After the fork-shaped elements have been inserted under the egg tray stacks 2 in the container 20, the egg tray stacks 2 are moved laterally over a distance A for them to come clear of the angle irons 7 and be subsequently moved in rearward direction, whereafter the egg tray stacks are pushed onto the discharge conveyor 36 by means of the pushing cylinder 34 and the pusher plate 35.

The use of a carrier plate 31 may present problems during unloading of a container, for instance when the carrier plate is positioned slightly above the loading board to be unloaded. Unlike the fork-shaped prongs 21, a carrier plate cannot be moved into the tunnel-shaped recesses of an egg tray stack. To prevent damage to the lowermost egg tray of a stack, the pusher plate 19 is fitted with short guiding elements 41, extending obliquely downwards, capable of engaging in the tunnel-shaped openings 42 of the egg tray stacks 2 so as to lift them slightly, to such an extent that the carrier plate 31 can subsequently be moved under the egg tray stacks. Due to the weight of the stack 2, the carrier plate 31 will bend to some extent, so that the carrier plate 31 can be moved under the stack arranged behind the frontmost egg tray stack.

During automatic unloading of manually loaded containers 20, a problem can occur in that some egg tray stacks may be arranged somewhat obliquely in the container, so that it may be problematic to push the fork-shaped elements 21 into the tunnel-shaped recesses 42 of the egg tray stacks. For automatic unloading, it is desired that the egg tray stacks be first oriented. To that end, the lifting table 6 and the pushing/carrying means thereof are equipped with wedge-shaped orienting means 47 which, by means of pneumatic cylinders 39, can be moved independently of the pusher plate 19 in forward direction into tunnel-shaped openings 38 between adjacent egg tray stacks 2. These wedge-shaped orienting means 47 can thus give the proper orientation to an egg tray stack to be removed, so that it can be lifted by the fork-shaped elements 21.

To enable laterally abutting egg tray stacks to be removed from the container 20, even in the case of unexpected resistance, the prongs of the fork 21 can be provided with hook-shaped elements 40, spring-biased in outward direction, which during unloading can engage behind nests of the lowermost egg tray of an egg tray stack 2. It will be clear that these gripping elements 40, when the apparatus is used as a loading apparatus, must be secured in such a manner that the gripping elements 40 do not project outside the prongs 21, so as to enable retraction of the prongs 21 from a container in which an egg tray stack has just been arranged.

## Claims

1. Apparatus for loading containers (20) with stacks (2) of egg-filled trays, said containers (20) being equipped with a series of loading boards (27) carrying said stacks in a side by side arrangement, and for unloading said containers, said apparatus comprising:
- a lifting table (6) for supplying said stacks (2) to a loading board of the container to be loaded, said lifting table (6) having a flat bearing surface;
- pushing means (18, 19) movable with respect to said lifting table (6) in the direction of said container (20) for transferring the egg tray stacks to the loading board (27);
the pushing means (18, 19) comprising a fork (21) connected to a pusher plate (19),
the prongs of said fork (21) being adapted to be inserted into recesses at the bottom of an egg tray stack (2);
tunnel shaped recesses (23) being provided in the bearing surface of the lifting table (6) for receiving the prongs of the fork (21); and
the pusher plate (19) being provided with a lifting cylinder (22) for displacing the fork (21) in an upward direction above the bearing surface of the lifting table.

2. Apparatus according to claim 1, characterized in that the lifting table (6) is mounted for lateral movement in a lifting frame (7) which is movable in vertical direction, said lifting frame (7) being provided with a lifting mechanism (29, 30) comprising an axially extendable pin (30) for lifting the depending edge (28) of the container loading board (27), located above the container loading board (27) to be loaded or unloaded.

3. Apparatus according to claims 1-2, characterized in that the prongs of the fork (21) are provided with hook-shaped elements (40), which are spring biased in outwardly extending direction, said elements being capable of engaging behind nests of the lowermost egg tray of a stack.

4. Apparatus according to one or more of claims 1-3, characterized in that the pusher plate (19) is provided with wedge-shaped orienting means (47), which, by means of pneumatic cylinders (39), can be moved independently of the pusher plate (19) in a forward direction into tunnel-shaped openings (38) between adjacent egg tray stacks (2) for correcting, prior to unloading, the orientation of any such stacks (2) as have an oblique position.

5. Apparatus for loading containers (20) with stacks (2) of egg filled trays, said containers (20) being equipped with a series of loading boards (27) carrying said stacks in a side by side arrangement, and for unloading said containers, said apparatus comprising:
- a lifting table (6) for supplying said stacks (2) to a loading board of the container to be loaded, said lifting table (6) having a flat bearing surface
- pushing means (18, 19) movable relative to said lifting table (6) in the direction of said container (20) for placing the egg tray stacks on the loading board (27) to be loaded;
said lifting table (6) comprising a flat carrier plate (31) the top surface of which being in alignment with the bearing surface of the lifting table (6), said carrier plate being movably mounted therein by means of a pneumatic cylinder (32), and the movement of said carrier plate (31) being independent of the movement of the pusher member (19).

6. Apparatus according to claim 5, characterized in that pusher plate (19) is provided at the bottom thereof with short, obliquely positioned guiding elements (41) capable of engaging in to the tunnel-shaped openings (42) of egg tray tracks (2) for lifting them slightly before the carrier plate (31) is moved beneath them.

## Patentansprüche

1. Vorrichtung zum Beladen von Behältern (20) mit Stapeln (2) von mit Eiern gefüllten Tabletts, wobei die Behälter (20) mit einer Reihe von Ladebrettern (27), die die Stapel in einer Seite-an-Seite Anordnung tragen, ausgerüstet sind, und zum Entladen der Behälter, mit
- einem Hebetisch (6) zur Abgabe der Stapel (2) an ein Ladebrett des zu beladenden Behälters, wobei der Hebetisch eine flache Auflageoberfläche aufweist;
- Schiebemitteln (18,19), die bezüglich des Hebetischs (6) in Richtung des Behälters (20) bewegbar sind um die Eiertablettstapel dem Ladebrett zu übergeben; wobei
die Schiebemittel eine Gabel (21), die mit einer Schiebeplatte verbunden ist, wobei die Zinken der Gabel geeignet sind, in am Boden eines Eiertablettstapels (2) vorgesehene Ausnehmungen eingerückt zu werden;
tunnelartig geformte Ausnehmungen (23), die in der Auflage fläche des Hebetischs (6) vorgesehen sind um die Zinken der Gabel (21) aufzunehmen, umfassen und
wobei die Schiebeplatte (19) mit einem Hebezylinder (22) zur Verlagerung der Gabel in einer nach oben gerichteten Richtung über die Auflageoberfläche des Hebetischs ausgestattet ist.

2. Vorrichtung nach Anspruch 1, dadurch gekennzeichnet, daß der Hebetisch (6) für eine seitliche Bewegung in einem Heberahmen (7) angebracht ist, welcher in vertikaler Richtung verlagerbar ist, wobei der Heberahmen (7) mit einer einen axial verlängerbaren Bolzen zum Anheben des sich abstützenden Bodens (28) des Behälterladebretts (27) umfassenden Hebeeinrichtung (29,30) versehen ist, die oberhalb des zu be- und entladenden Behälterladebretts angeordnet ist.

3. Vorrichtung nach Anspruch 2 oder 3, dadurch gekennzeichnet, daß die Zinken der Gabel (21) mit buchförmigen (book-shaped) Elementen (40) ausgerüstet sind, die durch eine Feder in eine sich nach außen erstreckende Richtung vorgespannt sind, wobei die Elemente für einen Eingriff hinter Ausnehmungen (nests) des untersten Eiertabletts des Stapels geeignet sind.

4. Vorrichtung nach einem oder mehreren der Ansprüche 1 bis 3, dadurch gekennzeichnet, daß die Schiebeplatte (19) mit keilförmigen Ausrichtungsmitteln ausgestattet ist, die mit Hilfe von pneumatischen Zylindern (39) unabhängig von der Schiebeplatte (19) in eine nach vorn gerichtete Richtung in tunnelförmige Öffnungen (38) zwischen zwei aneinandergrenzende Eiertablettstapel verlagerbar sind um vor dem Entladen die Ausrichtung eines jeden solcher Stapel (2), der eine schiefe Position aufweist, zu korrigieren.

5. Vorrichtung zum Beladen von Behältern mit Stapeln (2) von mit Eiern gefüllter Tabletts, wobei die Behälter (20) mit einer Reihe von Ladebrettern (27), die die Stapel in einer Seite-an-Seite Anordnung tragen, ausgerüstet sind, und zum Entladen der Behälter, mit
- einem Hebetisch (6) zur Abgabe der Stapel (2) an ein Ladebrett des zu beladenden Behälters, wobei der Hebetisch (6) eine flache Auflageoberfläche aufweist,
- Schiebemitteln (18,19), die relativ zum Hebetisch (6) in die Richtung des Behälters (20) bewegbar sind um die Eiertablettstapel auf dem zu beladenden Ladebrett (27) zu plazieren,
- wobei der Hebetisch (6) eine flache Trägerplatte (31) umfaßt, deren obere Oberfläche sich in gerader Linie mit der Auflageoberfläche des Hebetischs (6) befindet, wobei die Trägerplatte an diesem mit Hilfe eines Pneumatikzylinders (32) bewegbar angebracht ist und wobei die Bewegung der Trägerplatte (31) unabhängig von der Bewegung des Schiebeglieds (19) ist.

6. Vorrichtung nach Anspruch 5, dadurch gekennzeichnet, daß die Schiebeplatte (19) an ihrem Boden mit kurzen, schräg positionierten Führungselementen (41) ausgestattet ist, die geeignet sind, in die tunnelförmigen Öffnungen (42) der Eiertabletts (2) einzugreifen um diese geringfügig anzuheben, bevor die Trägerplatte (31) zwischen sie bewegt wird.

## Revendications

1. Appareil pour charger des conteneurs (20) avec des piles (2) de plateaux remplis d'oeufs, lesdits conteneurs (20) étant équipés d'une série de plaques de chargement (27) portant lesdites piles dans un agencement côte à côte, et pour décharger lesdits conteneurs, ledit appareil comprenant :
- une table de levage (6) pour amener lesdites piles (2) à une plaque de chargement du conteneur à charger, ladite table de levage (6) présentant une surface d'appui plate,
- des moyens de poussée (18,19) déplaçables par rapport à ladite table de levage (6) dans la direction dudit conteneur (20) pour transférer les piles de plateaux d'oeufs à la plaque de chargement (27),
- les moyens de poussée (18,19) comprenant une fourche (21) reliée à une plaque de poussée (19), les dents de la ladite fourche (21) étant adaptées pour être insérées dans des évidements au fond d'une pile de plateaux d'oeufs (2) ;
- des évidements en forme de tunnel (23) étant prévus dans la surface d'appui de la table de levage (6) pour recevoir les dents de la fourche (21) ; et
- la plaque de poussée (19) étant munie d'un vérin de levage (22) pour déplacer la fourche (21) dans une direction vers le haut au-dessus de la surface d'appui de la table de levage.

2. Appareil selon la revendication 1,
caractérisé en ce que la table de levage (6) est montée pour un mouvement latéral dans un cadre de levage (7) qui est déplaçable en direction verticale, ledit cadre de levage (7) étant muni d'un mécanisme de levage (29,30) comprenant une broche axialement extensible (30) pour soulever le bord pendant (28) de la plaque de chargement (27) du conteneur, situé au-dessus de la plaque de chargement (27) du conteneur à charger ou à décharger.

3. Appareil selon les revendications 1-2,
caractérisé en ce que les dents de la fourche (21) sont munies d'éléments (40) en forme de crochets, qui sont sollicités de façon élastique dans une direction s'étendant vers l'extérieur, lesdits éléments étant capables de s'engager derrière des poches du plateau d'oeufs le plus inférieur d'une pile.

4. Appareil selon une ou plusieurs des revendications 1-3,
caractérisé en ce que la plaque de poussée (19) est munie de moyens d'orientation (47) en forme de coin qui, au moyen de vérins pneumatiques (39), peuvent être déplacés indépendamment de la plaque de poussée (19) dans une direction avant dans des ouvertures en forme de tunnel (38) entre des piles de plateaux d'oeufs adjacentes (2) pour corriger, avant le déchargement, l'orientation de toutes telles piles (2) ayant une position oblique.

5. Appareil pour charger des conteneurs (20) avec des piles (2) de plateaux remplis d'oeufs, lesdits conteneurs (20) étant équipés d'une série de plaques de chargement (27) portant lesdites piles dans un agencement côte à côte, et pour décharger lesdits conteneurs, ledit appareil comprenant :
- une table de levage (6) pour amener lesdites piles (2) à une plaque de chargement du conteneur à charger, ladite table de levage (6) ayant une surface d'appui plate,
- des moyens de poussée (18,19) déplaçables par rapport à ladite table de levage (6) dans la direction dudit conteneur (20) pour placer les piles de plateaux d'oeufs sur la plaque de chargement (27) à charger,
- ladite table de levage (6) comprenant une plaque de support plate (31) dont la surface supérieure est en alignement avec la surface d'appui de la table de levage (6), ladite plaque de support étant montée de façon mobile dans celle-ci au moyen d'un vérin pneumatique (32), et le déplacement de ladite plaque de support (31) étant indépendant du déplacement de l'organe de poussée (19).

6. Appareil selon la revendication 5,
caractérisé en ce que la plaque de poussée (19) est munie, à son fond, d'éléments de guidage courts (41) positionnés obliquement, capables de s'engager dans les ouvertures en forme de tunnel (42) de piles de plateaux d'oeufs (2) pour les soulever légèrement avant que la plaque de support (31) soit déplacée au-dessous de celle-ci.
